# NEW EUROPEAN PATENT SPECIFICATION

(11) **EP 0 165 819 B2**
(45) Date of publication and mention of the opposition decision: **17.05.1995**
(45) Mention of the grant of the patent: 30.08.1989
(21) Application number: 85304420.4
(22) Date of filing: 20.06.1985
(51) Int. Cl.: B65B 9/20, B65B 51/16

(54) **Packaging apparatus**
Verpackungsvorrichtung
Dispositif d'emballage

(30) Priority: 20.06.1984 AU 5596/84
(43) Date of publication of application: 27.12.1985
(73) Proprietor: Taylor, Alfred Alexander, Condell Park New South Wales 2200 (AU)
(72) Inventor: Taylor, Alfred Alexander, Condell Park New South Wales 2200 (AU)
(74) Representative: Barnard, Eric Edward

(56) References cited:
- DE-A- 2 126 498
- DE-A- 2 551 139
- DE-A- 3 141 431
- DE-A- 3 732 033
- DE-C- 973 238
- GB-A- 1 456 882
- US-A- 2 629 987
- US-A- 2 915 866
- US-A- 3 045 404
- US-A- 3 070 931
- US-A- 3 256 673
- US-A- 3 262 244
- US-A- 3 522 689
- US-A- 3 629 987
- US-A- 3 850 780
- US-A- 4 199 919
- US-A- 4 391 081
- US-A- 4 433 527
- Brochure "Automation" published by General Packaging Equipment Company"
- Brochure "Rose Forgrove FR98" published by Rose Forgrove Limited

## Description

The present invention relates to packaging apparatus and more particularly but not exclusively to packaging apparatus to package food products such as potato crisps.

In the packaging of many products, bag material is delivered, to a sealing head, in tubular form. The product to be packaged, is delivered to the sealing head and is located within the bag material. The bag material is sealed transverse of its longitudinal direction of extension, and then the material is located within the bag material. Thereafter, the tube is closed, a stripping apparatus condenses the volume occupied by the product to be packaged, and the bag material again sealed, so that the packaged material is located within a discrete bag. The bag is then severed from the tubular bag material. This packaging operation is generally intermittent, that is not continuous.

It is a disadvantage of known apparatus that the sealing, closing, stripping and severing of the bag is achieved by relatively complex apparatus which increases the cost of the machine as well as rendering the machine unreliable. Additionally these known apparatus operate intermittently, and accordingly are slow.

GB 1 456 882 discloses a method of controllably disseminating into the atmosphere a substance which is normally flowable under atmospheric pressure which is vaporizable under atmospheric condition. The method of '882 comprises the steps of forming a chamber having a flexible wall part and a wall portion of plastic material, supplying into the chamber under a atmospheric pressure conditions a quantity of said flowable substance, and hermetically sealing the chamber under gas-free conditions. The substance thereafter travels through the plastics material and, at the outer surface thereof evaporates into the atmosphere.

US-A-3 850 780 to Crawford et al teaches an extended dwell heat sealer wherein a modified rotary motion is imparted to heated sealing jaws on counter-rotating shafts straddling a web to be sealed. Therefore, the jaws are directed along a linear path while in sealing engagement with the web. Each sealing jaw support is provided with follower rollers engaged with stationary cams coaxially located relative to an adjacent cutting head shaft. The drive train incorporates a cam for providing a constant velocity for the sealing jaws when engaging the web.

US-A-3045404 (Wilson) describes a wrapping machine for packing loose articles of a type which create impact on newly created heat seals transverse of the tubular bag material. In this machine, heated jaws are mounted on a pair of counter-rotating shafts so as to contact the bag material periodically and produce the seals. To protect the seals against damage when the articles fall into the package which is being produced the shafts also carry helical springs which contact the bag material just after the formation of a seal and then move away to permit the product to descend against the seal.

US-A-2915866 (Bartlo) describes a packaging machine which uses sealing dies which reciprocate up and down and also move transversally of a tubular bag material therebetween to clamp and release the material. The dies produce seals across the bag material and also draw the bag material on to produce the next package. To package bulky lightweight products, like potato chips, the machine employs stripper rods which are carried on spring-loaded levers pivotably mounted on bearing blocks connected with brackets to the dies. During operation, as the dies approach the bag material by moving linearly towards one another the stripper rods contact the bag material first and the levers are caused to pivot on the bearing blocks against the spring force to compress the product and remove product from the zone over which the seal is to be created by the dies.

US-A-3070931 (Zwight) describes a packaging machine for packing free flowing light products, such as potato chips. The machine employs a frame which is reciprocated up and down and supports movable jaws which pivot angularly relative to the frame. On the jaws, there are mounted retractable shafts supporting strippers, upper and lower heat sealers and a knife. During operation, the jaws are swung upwardly away from the tubular bag material as the frame moves linearly upwardly and then the jaws are swung inwards towards the bag material to cause the heat sealers to engage on the bag material to create a transverse bottom seal for the package to be formed. The entire frame with the jaws is then moved linearly downwardly by the length of the package to be formed to draw the bag material downwardly and the jaws are swung upwardly away from the bag material again. Product is now dispensed into the partly-formed package. The jaws are next swung inwards towards the bag material to cause the strippers to compress the product into the partly formed package prior to engagement with the sealers. The lower sealers now produce the top seal for the package and the knife separates the package.

As mentioned above reciprocal motion , e.g. of the frame of Zwight necessary to advance the bag material and the to and fro pivotal or swinging movements e.g. of the jaws of Zwight are inherently intermittent and slow.

According to the invention there is provided a stripping and sealing assembly, for packaging apparatus, said apparatus including a product delivery head and a drive assembly to pass tubular bag material past said delivery head so that product delivered from said head is located within said tubular bag material, said stripping and sealing assembly including a pair of opposing sealing and stripping means located on opposite sides of said bag material at a position downstream from said delivery head relative to the direction of movement of said bag material through said apparatus, said sealing and stripping means being adapted to cooperate to sealingly close portions of said bag material and strip same, a first arm means supporting one of said sealing and stripping means and a second arm means supporting the other sealing and stripping means a pair of generally parallel rotatably driven shafts from each of which there extends radially outwardly therefrom one of the arm means cutting means mounted so as to be adjacent the extremities of the arm means and adapted to cooperate to sever said sealed portions from said bag material to thereby form discreet bags of said product and wherein each sealing and stripping means includes co-operating stripper bars which strip the bag material wherein the arm means via said shafts are rotatably driven continuously through complete revolutions in synchronism in opposite directions about spaced parallel fixed axes extending generally transverse of the direction of movement of the bag material so that prior to sealing said bag material the sealing and stripping means are moved along said bag material to cause the stripper bars to strip same, and wherein each arm means is provided with one of the stripper bars, and the assembly further includes pivotable supports for each stripper bar pivotally mounting the stripper bars relative to said arm means so as to provide for relative movement therebetween.

Preferred forms of the present invention will now be described by way of example with reference to the accompanying drawings wherein:
Figure 1 is a schematic side view of a sealing, closing and stripping assembly in operation;
Figure 2 is a schematic part sectioned side elevation of the sealing, closing and stripping assembly of Figure 1;
Figure 3 is a schematic plan view of the sealing, closing and stripping assembly of Figure 2;
Figure 4 is a schematic part sectioned side elevation of a further sealing, closing and stripping assembly to that of Figure 1; and
Figure 5 is a schematic plan view of a portion of the sealing, closing and stripping assembly of Figure 4.

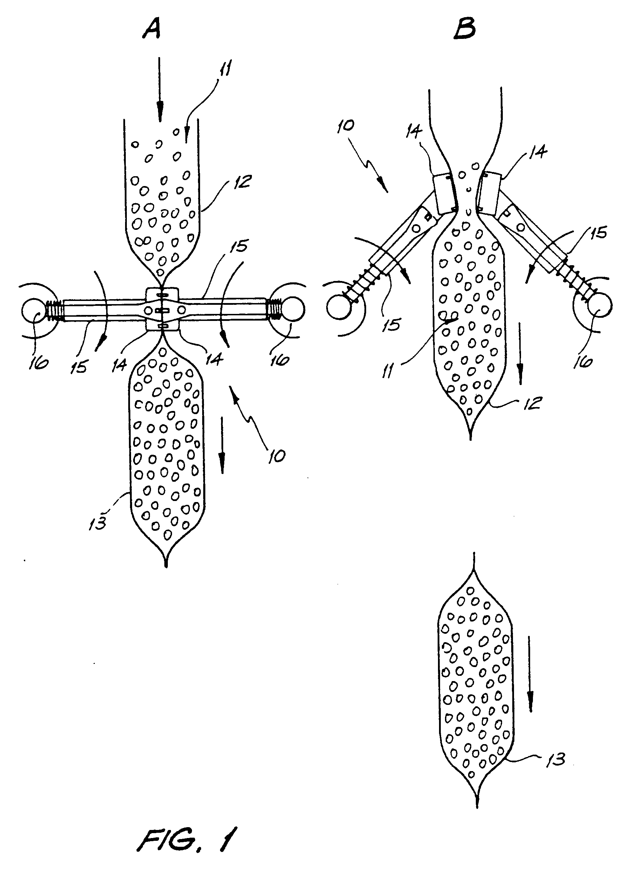

In Figure 1 there is schematically depicted a stripping, closing and sealing assembly 10 to be employed in a packaging machine. The assembly 10 operates in a rotary manner and accordingly can operate on a continuous basis. The packaging machine has a product delivery head which delivers product 11 to the interior of a tubular bag material 12. The sealing, closing and stripping assembly 10 strips the bag material 12 and severs discrete bags 13 from the bag material 12. The assembly 10 includes two opposing sealing, closing and stripping heads 14 which are each mounted on an arm 15 fixed to a shaft 16. The shafts 16 are rotatably driven in opposite directions and have the same angular velocity. The heads 14 are pivotally mounted on the end of each arm 15 as well as being movable longitudinally of their respective arm 15.

The sequence of operation of the above described assembly 10 is as follows. Firstly, the tubular bag material 12 is driven past a product delivery head so that the product 11 is delivered to the interior of the tubular material 12. The heads 14 engage the material so as to sealingly close the bag material 12 at a particular position. For example, in position A, the heads 14 are engaging the material 12 and are severing the bag 13 therefrom. Once the bag 13 has been formed and is allowed to fall freely from the assembly 10, the arms 15 rotate to the position B. Thereafter the heads 14 are forced into engagement with the bag material 12 so as to bring the bag material 12 together for stripping and sealing. The two heads 14 are moved toward each other and are moved in the direction of movement of the material 12 at a velocity greater than the velocity of the material 12. Accordingly, the heads 14 will cause stripping of the bag material 12 to thereby reduce the volume occupied by the product 11. Upon the heads 14 reaching a predetermined position, the bag material 12 is sealed so that a fresh bag is thus formed and severed from the remainder of the material 12.

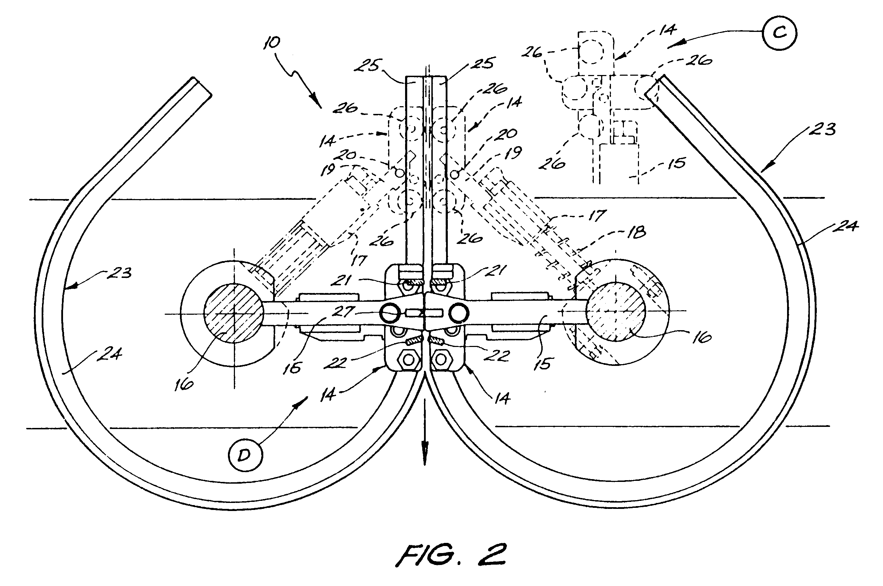

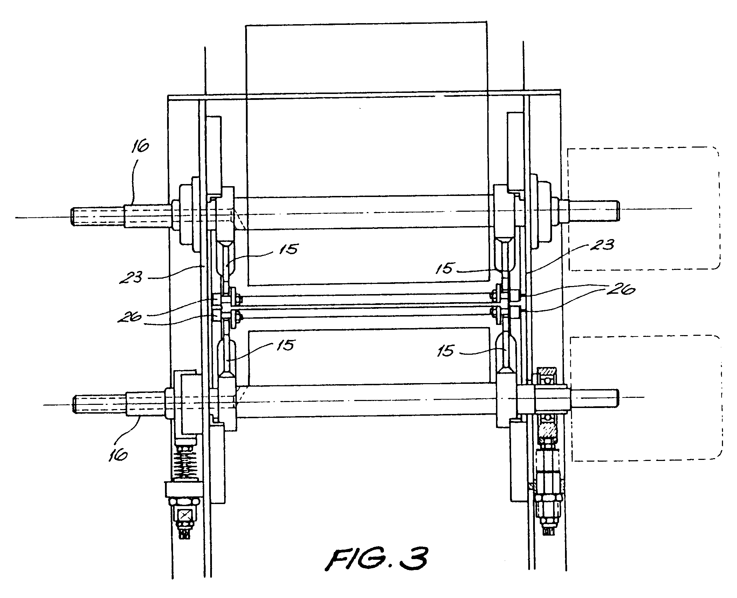

Turning now to Figures 2 and 3 wherein the stripping, closing and sealing assembly 10 is more fully depicted. The heads 14 are mounted on a carriage 17 which is telescopically located on the shaft 15, More particularly, the carriage 17 is spring biased by the spring 18 to a position at the radially outer end of the arms 15. Each of the carriages 17 has an arm 19 to which the heads 14 are pivotally attached by means of pins 20. Each head 14 is provided with a closing bar 21 and a stripper bar 22.

Surrounding the shafts 16 are two cam tracks 23 which have a curved portion 24 and a linear portion 25 extending generally parallel to and adjacent to the bag material 12. Each of the heads 14 is provided with a pair of cam followers 26 which engage the cam track 23 so that in cooperation therewith the heads 14 follow a predetermined path. The cam followers 26 are eccentrically mounted so that the distance between the heads 14 is adjustable. Accordingly, in operation, the heads 14 follow a generally linear path defined by the linear portion 25 of the cam track 23 while the bag material 12 is engaged. Thereafter, the heads 14 move from contact with the bag material 12 and follow the curved portion 24 of the cam track 23. Upon reaching the terminal end of the curved portion 24, the heads 14 move to the position C depicted in Figure 2. Once in this position, the closing bars 21 will contact the bag material 12 prior to the stripping bars 22. Upon the bag material 12 being engaged, the heads 14 are driven at a speed faster than the bag material so that the product 11 in the bag material 12 is compacted. As the heads 14 reach the position D depicted in Figure 2, the bag material 12 is sealed and the newly formed bag 13 severed from the bag material 12.

On the radially outer end of one of the arms 15 there is provided a knife 27 which severs the bag material 12 to release the bag 13 while additionally, the radially outer ends of the arms 15 operate as sealing jaws in that they are heated so as to sealingly close the bag material 12 prior to the bag 13 being severed from the material 12. It should be appreciated that other means apart from heating could be used to seal the bar, such as the use of adhesives.

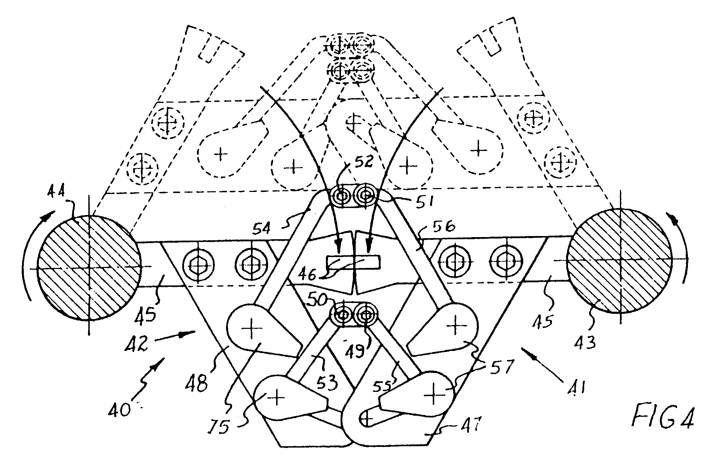

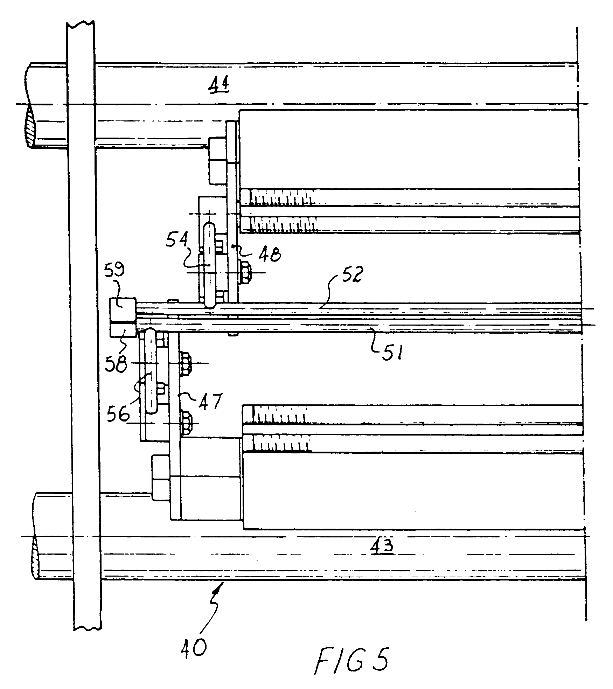

In Figures 4 and 5 there is schematically depicted a sealing, closing and stripping head assembly 40 including a pair of opposing closing and stripping heads 41 and 42 mounted on two rotatably driven shafts 43 and 44 which are driven in opposite directions and at the same angular velocity. Each assembly includes a pair of arms 45, with each pair of arms 45 being provided at its radially outer extremity with a knife assembly 46, which assembly 46 are also heated in order to seal the bag material passing therethrough in a similar manner to the assembly 10 described with reference to Figures 1 to 3. The arms 45 extend radially from the axis of rotation of the respective shaft 43 or 44. Each of the arms 45 is provided with a support 47 or 48, which supports 47 and 48 receive tube closing and stripper bars 49 to 52. The stripper bars 49 and 50 being supported respectively by arms 55 and 53, and tube closer bars 51 and 52 being supported respectively by arms 56 and 54. Each of the arms 53 to 56 is supported by a pivot assembly 57 which allows rotation of each of the arms 53 to 56 about an axis fixed relative to its associated arm 47 or 48. Additionally, the pivot assemblies 57 resiliently bias the arms 53 to 56 to a position relative to their supports 47 and 48, as depicted in "ghostlines" in Figure 4.

The stripper and tube closer bars 49 and 51 are both provided with a plug member 58 while the stripper and tube closer bars 50 and 52 are provided with a socket member 59. During movement of the two pairs of arms 45 when the stripper bars 49 and 50, and tube closer bars 51 and 52 are engaged during a stripping action relative to the tubular bag material,the associated pairs of plug members 58 and socket members 59 are engaged. This ensures that the pairs of stripper bars 49 and 50, and tube closer bars 51 and 52 are held in the correct relative positions.

As the arms 45 rotate and the stripper bars and tube closer 49 to 52 approach each other, each pair of stripper bars 49 and 50, and tube closer bars 51 and 52 are located adjacent each other in order to inhibit the location of any product between the two pairs of stripper bars. Once the stripper bars are engaged, further rotation of the arms 45 causes the two pairs (51, 52 and 49, 50) of stripper and tube closer bars to separate longitudinally of the bag material to thereby provide a space of bag material which is free from product, which space of bag material is then engaged by the assemblies 46. This ensures that when the individual bags are sealed and removed from the tubular material there is no product which would hinder sealing and separation.

To provide the stripping action, at least the two bars 49 and 50 would have a velocity greater than the velocity of the tubular bag material while in contact therewith. Preferably all four bars 49 to 52 would have a velocity greater than the bag material.

## Claims

1. A stripping and sealing assembly, for packaging apparatus, said apparatus including a product delivery head and a drive assembly to pass tubular bag material (12) past said delivery head so that product delivered from said head is located within said tubular bag material (12), said stripping and sealing assembly including a pair of opposing sealing and stripping means (14, 40, 41, 42) located on opposite sides of said bag material (12) at a position downstream from said delivery head relative to the direction of movement of said bag material (12) through said apparatus, said sealing and stripping means (14, 40, 41, 42) being adapted to cooperate to sealingly close portions of said bag material (12) and strip same, a first arm means (15, 45) supporting one of said sealing and stripping means (14, 40, 41, 42) and a second arm means (15, 45) supporting the other sealing and stripping means (14, 40, 41, 42), a pair of generally parallel rotatably driven shafts (16, 43, 44) from each of which there extends radially outwardly therefrom one of the arm means (15, 45), cutting means (27, 46) mounted so as to be adjacent the extremities of the arm means (15, 45) and adapted to cooperate to sever said sealed portions from said bag material (12) to thereby form discreet bags of said product and wherein each sealing and stripping means (14, 40, 41, 42) includes co-operating stripper bars (22, 49, 50) which strip the bag material (12); wherein the arm means (15, 45) via said shafts (16, 43, 44) are rotatably driven continuously through complete revolutions in synchronism in opposite directions about spaced parallel fixed axes extending generally transverse of the direction of movement of the bag material (12) so that prior to sealing said bag material (12) the sealing and stripping means (14, 40, 41, 42), are moved along said bag material (12) to cause the stripper bars (22, 49, 50), to strip same, and wherein each arm means (45) is provided with one of the stripper bars (22, 49, 50), and the assembly further includes pivotable supports (19, 20, 53, 55, 47, 48, 57) for each stripper bar (49, 50) pivotally mounting the stripper bars (49, 50) relative to said arm means (15,45) so as to provide for relative movement therebetween.

2. The assembly of Claim 1, wherein the sealing and stripping means (40, 41, 42) further includes a pair of tube closing bars (51, 52) with a first one of the closing bars (51) being mounted on said first arm means (45) and the other closing bar (52) being mounted on said second arm means (45) so as to cooperate in closing said tubular bag material (12) at a position upstream thereof relative to said stripper bars (49, 50), further support arms (54, 56) for said closing bars (51, 52), the support arms (52, 53, 54, 55) for said closing and stripper bars providing for separating relative movement between said closing and stripper bars (49, 50, 51, 52) during closing and stripping of said tubular material (12), with at least said stripper bars (49, 50) having a velocity greater than the bag material (12) and greater than the velocity of the closing bars (51, 52) while in contact with the tubular material (12).

3. The assembly of Claim 2, further including a pair of support members (47, 48) fixed to their associated shaft (43,44), and wherein said support arms (53, 54, 55, 56) pivotally attach the associated stripper and closing bars (49, 50, 51, 52) to said support members (47, 48), and means biasing each support arm (53, 54, 55, 56) to a predetermined position relative to its associated support member (47, 48).

4. The assembly of Claim 3, wherein the support arms (53, 54, 55, 56) pivot about axes parallel to said shafts (43, 44), with the support arm axes being spaced from each other both angularly and radially relative to the associated shafts (43, 44).

5. The assembly of Claim 1, wherein each sealing and stripping means includes a closing and stripping head (14), with each head (14) having a closing bar (21) and one of the stripping bars (22) extending generally transverse of the tubular bag material (12).

6. The assembly of Claim 5, further including a first mounting means pivotally attached to the radial extremity of said first arm means (15) and supporting one of the closing bars (21) and one of the stripping bars (22) in a spaced fixed relationship relative to each other and a second mounting means pivotally attached to the radial extremity of the other arm means (15) and supporting the other closing bar (21) and other stripping bar (22) in a fixed relationship relative to each other.

7. The assembly of Claim 6, wherein each mounting means is resiliently biased to a predetermined working relationship so that the closing bars (21) engage the bag material 12) first relative to the stripping bars (22).

8. The assembly of Claim 7, wherein said arm means (15) are rotatably driven so that said heads (14) have a velocity greater than the velocity of said tubular bag material (12) when engaged therewith, prior to sealing.

9. The assembly of Claim 8, further including track means (24) to guide said heads (14) during operation thereof.

10. The assembly of Claim 9, wherein each mounting means is radially movable relative to its associated supporting arm means (15).

## Patentansprüche

1. Abstreif- und Verschließ-Anordnung für eine Verpackungsvorrichtung, wobei die Vorrichtung einen Produktzuführkopf und eine Antriebsanordnung beinhaltet, durch die schlauchförmiges Beutelmaterial (12) an dem Zuführkopf vorbei zuführbar ist, so daß von dem Kopf zugeführtes Produktmaterial in dem schlauchförmigen Beutelmaterial (12) angeordnet ist, wobei die Abstreif- und Verschließ-Anordnung ein Paar einander gegenüberliegender Verschließ- und Abstreif-Einrichtungen (14, 40, 41, 42) aufweist, die an einer dem Zuführkopf in bezug auf die Bewegungsrichtung des Beutelmaterials (12) durch die Vorrichtung nachgeordneten Stelle auf entgegengesetzten Seiten des Beutelmaterials (12) angeordnet sind, wobei die Abstreif- und Verschließ-Einrichtungen (14, 40, 41, 42) zum derartigen Zusammenwirken ausgelegt sind, daß sie Bereiche des Beutelmaterials (12) abdichtend verschließen sowie diese abstreifen, wobei eine erste Armeinrichtung (15, 45) die eine Verschließ- und Abstreif-Einrichtung (14, 40, 41, 42) trägt und eine zweite Armeinrichtung (15, 45) die andere Verschließ- und Abstreif-Einrichtung (14, 40, 41, 42) trägt, wobei an Paar allgemein paralleler, drehbar angetriebener Wellen (16, 43, 44) vorgesehen ist, von denen sich jeweils eine der Armeinrichtungen (15, 45) radial nach außen erstreckt, wobei Schneideinrichtungen (27, 46) derart angebracht sind, daß sie den Endbereichen der Armeinrichtungen (15, 45) benachbart sind sowie zum derartigen Zusammenarbeiten ausgelegt sind, daß sie die verschlossenen Bereiche von dem Beutelmaterial (12) abtrennen, um dadurch einzelne Beutel mit dem Produkt zu bilden, und wobei jede Verschließ- und Abstreif-Einrichtung (14, 40, 41, 42) zusammenwirkende Abstreifstäbe (22, 49, 50) aufweist, die das Beutelmaterial (12) abstreifen; wobei die Armeinrichtungen (15, 45) über die Wellen (16, 43, 44) um voneinander beabstandete, parallele, feststehende Achsen, die sich allgemein quer zu der Bewegungsrichtung des Beutelmaterials (12) erstrecken, kontinuierlich um vollständige Umdrehungen synchron in gegenläufigen Richtungen rotationsmäßig derart angetrieben werden, daß vor dem Verschließen des Beutelmaterials (12) die Verschließ- und Abstreif-Einrichtungen (14, 40, 41, 42) das Beutelmaterial (12) entlangbewegt werden, um die Abstreifstäbe (22, 49, 50) zum Abstreifen desselben zu veranlassen, und wobei jede der Armeinrichtungen (45) mit einem der Abstreifstäbe (22, 49, 50) versehen ist, und wobei die Anordnung außerdem schwenkbare Trageeinrichtungen (19, 20, 53, 55, 47, 58, 57) für jeden Abstreifstab (49, 50) aufweist, durch die die Abstreifstäbe (49, 50) relativ zu den Armeinrichtungen (15, 45) schwenkbar angebracht sind, um dazwischen eine Relativbewegung zu schaffen.

2. Anordnung nach Anspruch 1,
wobei die Verschließ- und Abstreif-Einrichtung (40, 41, 42) weiterhin ein Paar Schlauchschließstäbe (51, 52) aufweist, wobei ein erster der Schließstäbe (51) an der ersten Armeinrichtung (45) angebracht ist und der andere Schließstab (52) an der zweiten Armeinrichtung (45) angebracht ist, so daß sie beim Verschließen des schlauchförmigen Beutelmaterials (12) an einer in bezug auf die Abstreifstäbe (49, 50) vorgeordneten Stelle zusammenwirken, wobei weitere Tragarme (54, 56) für die Schließstäbe (51, 52) vorgesehen sind, wobei die Tragarme (52, 53, 54, 55) für die Schließ- und Abstreifstäbe eine Trennung der Relativbewegung zwischen den Schließ- und Abstreifstäben (49, 50, 51, 52) während des Schließens und Abstreifens des schlauchförmigen Materials (12) schaffen, wobei wenigstens die Abstreifstäbe (49, 50) eine größere Geschwindigkeit als das Beutelmaterial (12) sowie eine größere Geschwindigkeit als die Geschwindigkeit der Schließstäbe (51, 52) aufweisen, während sie sich mit dem schlauchförmigen Material (12) in Berührung befinden.

3. Anordnung nach Anspruch 2,
weiterhin mit einen Paar Trageglieder (47, 48), die an ihrer zugehörigen Welle (43, 44) festgelegt sind, und wobei die zugehörigen Abstreif- und Schließstäbe (49, 50, 51, 52) durch die Tragarme (53, 54, 55, 56) an den Tragegliedern (47 ,48) schwenkbar angebracht sind, und wobei eine Einrichtung jeden Tragarm (53, 54, 55, 56) in eine vorbestimmte Position relativ zu seinem zugehörigen Trageglied (47, 48) vorspannt.

4. Anordnung nach Anspruch 3,
wobei die Tragarme (53, 54, 55, 56) um parallel zu den Wellen (43, 44) verlaufende Achsen schwenkbar sind und die Tragarmachsen sowohl winkelmäßig als auch radial relativ zu der zugehörigen Welle (43, 44) voneinander beabstandet sind.

5. Anordnung nach Anspruch 1,
wobei jede Verschließ- und Abstreif-Einrichtung einem Verschließ- und Abstreif-Kopf (14) aufweist, wobei jeder Kopf (14) einen Schließstab (21) und einen der Abstreifstäbe (22) aufweist, die sich allgemein quer zu dem schlauchförmigen Beutelmaterial (12) erstrecken.

6. Anordnung nach Anspruch 5,
weiterhin mit einer ersten Befestigungseinrichtung, die an dem radial äußeren Endbereich der ersten Armeinrichtung (15) schwenkbar angebracht ist und einen der Schließstäbe (21) sowie einen der Abstreifstäbe (22) in voneinander beabstandeter, feststehender Beziehung relativ zueinander trägt, und mit einer zweiten Befestigungseinrichtung, die an dem radial äußeren Endbereich der anderen Armeinrichtung (15) schwenkbar angebracht ist und den anderen Schließstab (21) und den anderen Abstreifstab (22) in einer feststehenden Beziehung relativ zueinander trägt.

7. Anordnung nach Anspruch 6,
wobei jede Befestigungseinrichtung in federnd nachgiebiger Weise in ein vorbestimmtes Arbeitsverhältnis vorgespannt ist, so daß die Schließstäbe (21) relativ zu den Abstreifstäben (22) zuerst mit dem Beutelmaterial (12) in Eingriff treten.

8. Anordnung nach Anspruch 7,
wobei die Armeinrichtungen (15) derart rotationsmäßig angetrieben sind, daß die Köpfe (14) vor dem Verschließen und bei Eingriff mit dem schlauchförmigen Beutelmaterial (12) eine größere Geschwindigkeit als die Geschwindigkeit des schlauchförmigen Beutelmaterials (12) aufweisen.

9. Anordnung nach Anspruch 8,
weiterhin mit einer Führungseinrichtung (24) zum Führen der Köpfe (14) während ihres Betriebs.

10. Anordnung nach Anspruch 9,
wobei jede Befestigungseinrichtung relativ zu ihrer zugehörigen Tragarmeinrichtung (15) radial beweglich ist.

## Revendications

1. Ensemble d'étranglement et de scellage pour un appareil d'emballage, ledit appareil comprenant une tête de distribution de produit et un ensemble d'entraînement destiné à faire passer une matière tubulaire (12) pour sachets par ladite tête de distribution afin qu'un produit distribué de ladite tête soit placé à l'intérieur de ladite matière tubulaire (12) pour sachets, ledit ensemble d'étranglement et de scellage comprenant une paire de moyens opposés (14, 40, 41, 42) de scellage et d'étranglement situés sur des côtés opposés de ladite matière (12) pour sachets, en une position située en aval de ladite tête de distribution par rapport au sens du mouvement de ladite matière (12) pour sachets à travers ledit appareil, lesdits moyens (14, 40, 41, 42) de scellage et d'étranglement étant conçus pour coopérer afin de fermer de façon scellée des parties de ladite matière (12) pour sachets et de les étrangler, un premier moyen à bras (15, 45) supportant l'un desdits moyens (14, 40, 41, 42) de scellage et d'étranglement et un second moyen à bras (15, 45) supportant l'autre moyen (14, 40, 41, 42) de scellage et d'étranglement, deux arbres (16, 43, 44), entraînés en rotation et globalement parallèles, de chacun desquels s'étend radialement vers l'extérieur l'un des moyens à bras (15, 45), des moyens de coupe (27, 46) montés de façon à être adjacents aux extrémités des moyens à bras (15, 45) et conçus pour coopérer de façon à sectionner lesdites parties scellées de ladite matière (12) pour sachets afin de former des sachets distincts dudit produit, chacun des moyens (14, 40, 41, 42) de scellage et d'étranglement comprenant des barres coopérantes (22, 49, 50) d'étranglement qui étranglent la matière (12) pour sachets ; les moyens à bras (15, 45) étant entraînés en rotation en continu, sur des tours complets, par l'intermédiaire desdits arbres (16, 43, 44), en synchronisme et dans des sens opposés autour d'axes fixes, parallèles et espacés s'étendant à peu près transversalement à la direction du mouvement de la matière (12) pour sachets afin que, avant de sceller ladite matière (12) pour sachets, les moyens (14, 40, 41, 42) de scellage et d'étranglement soient déplacés le long de ladite matière (12) pour sachets afin d'amener les barres (22, 49, 50) d'étranglement à l'étrangler, chacun des moyens à bras (45) étant pourvu de l'une des barres d'étranglement (22, 49, 50), et l'ensemble comprenant en outre des supports pivotants (19, 20, 53, 55, 47, 48, 57) pour chaque barre (49, 50) d'étranglement, sur lesquels les barres d'étranglement (49, 50) sont montées de façon à pouvoir pivoter par rapport auxdits moyens à bras (15, 45) afin de réaliser un mouvement relatif entre eux.

2. Ensemble selon la revendication 1, dans lequel les moyens (40, 41, 42) de scellage et d'étranglement comprennent en outre deux barres (51, 52) de fermeture de tube, une première des barres (51) de fermeture étant montée sur ledit premier moyen à bras (45) et l'autre barre de fermeture (52) étant montée sur ledit second moyen à bras (45) afin que les barres coopèrent pour fermer ladite matière tubulaire (12) pour sachets en une position située en amont de celle-ci par rapport auxdites barres (49, 50) d'étranglement, d'autres bras de support (54, 56) pour lesdites barres de fermeture (51, 52), les bras de support (52, 53, 54, 55) pour lesdites barres de fermeture et d'étranglement produisant un mouvement relatif de séparation entre lesdites barres de fermeture et d'étranglement (49, 50, 51, 52) pendant la fermeture et l'étranglement de ladite matière tubulaire (12), lesdites barres d'étranglement (49, 50), au moins, ayant une vitesse supérieure à celle de la matière (12) pour sachets et supérieure à la vitesse des barres (51, 52) de fermeture tout en étant en contact avec la matière tubulaire (12).

3. Ensemble selon la revendication 2, comprenant en outre deux éléments (47, 48) de support fixés à leurs arbres associés (43, 44), et dans lequel lesdits bras (53, 54, 55, 56) de support relient de façon pivotante les barres associées d'étranglement et de fermeture (49, 50, 51, 52) auxdits éléments de support (47, 48), et des moyens rappelant chaque bras de support (53, 54, 55, 56) vers une position prédéterminée par rapport à son élément de support associé (47, 48).

4. Ensemble selon la revendication 3, dans lequel les bras de support (53, 54, 55, 56) pivotent autour d'axes parallèles auxdits arbres (43, 44), les axes des bras de support étant espacés l'un de l'autre à la fois angulairement et radialement par rapport aux arbres associés (43, 44).

5. Ensemble selon la revendication 1, dans lequel chacun des moyens de scellage et d'étranglement comprend une tête (14) de fermeture et d'étranglement, chaque tête (14) ayant une barre (21) de fermeture et l'une des barres (22) d'étranglement s'étendant à peu près transversalement à la matière tubulaire (12) pour sachets.

6. Ensemble selon la revendication 5, comprenant en outre un premier moyen de montage relié de façon pivotante à l'extrémité radiale dudit premier moyen à bras (15) et supportant l'une des barres de fermeture (21) et l'une des barres d'étranglement (22) dans une disposition espacée et fixe l'une par rapport à l'autre, et un second moyen de montage relié de façon pivotante à l'extrémité radiale de l'autre moyen à bras (15) et supportant l'autre barre de fermeture (21) et l'autre barre d'étranglement (22) dans une disposition fixe l'une par rapport à l'autre.

7. Ensemble selon la revendication 6, dans lequel chaque moyen de montage est rappelé élastiquement vers une disposition prédéterminée de travail afin que les barres de fermeture (21) entrent en contact avec la matière (12) pour sachets en premier par rapport aux barres d'étranglement (22).

8. Ensemble selon la revendication 7, dans lequel lesdits moyens à bras (15) sont entraînés en rotation de façon que lesdites têtes (14) aient une vitesse supérieure à la vitesse de ladite matière tubulaire (12) pour sachets lorsqu'elles sont en contact avec elle, avant le scellage.

9. Ensemble selon la revendication 8, comprenant en outre des moyens à chemin (24) destinés à guider lesdites têtes (14) pendant leur fonctionnement.

10. Ensemble selon la revendication 9, dans lequel chaque moyen de montage est mobile radialement par rapport à son moyen à bras de support associé (15).
